# EUROPÄISCHE PATENTSCHRIFT

(11) **EP 1 201 582 B1**
(45) Veröffentlichungstag und Bekanntmachung des Hinweises auf die Patenterteilung: **24.01.2007**
(21) Anmeldenummer: 01124492.8
(22) Anmeldetag: 12.10.2001
(51) Int. Cl.: B65H 7/02, B65H 5/24, B65H 11/00

(54) **Vorrichtung zur Kontrolle von Bögen**
Device for controlling sheets
Dispositif pour contrôler des feuilles

(30) Priorität: 25.10.2000 DE 20018193 U
(43) Veröffentlichungstag der Anmeldung: 02.05.2002
(73) Patentinhaber: Leuze electronic GmbH + Co., D-73277 Owen (DE)
(72) Erfinder: Banschbach, Rolf, 72584 Hülben (DE); Schönhaar, Jürgen, 72669 Unterensingen (DE)
(74) Vertreter: Ruckh, Rainer Gerhard

(56) Entgegenhaltungen:
- DE-A1- 3 100 065
- DE-A1- 4 233 854
- DE-C1- 19 537 954
- PATENT ABSTRACTS OF JAPAN Bd. 2000, Nr. 09, 13. Oktober 2000 (2000-10-13) & JP 2000 153937 A (HEIDELBERGER DRUCKMAS AG), 6. Juni 2000 (2000-06-06) -& US 6 283 471 B1 (KÜNZEL ET AL) 4. September 2001 (2001-09-04)
- BILLER U: "KEIN BLATT ZUVIEL" TECHNISCHE RUNDSCHAU, HALLWAG, BERN, CH, Bd. 88, Nr. 21, 24. Mai 1996 (1996-05-24), Seiten 42-43, XP000593950 ISSN: 0040-148X

## Beschreibung

Die Erfindung betrifft eine Vorrichtung zur Kontrolle von Bögen gemäß dem Oberbegriff des Anspruchs 1.

Eine derartige Vorrichtung ist aus der DE 195 37 954 C1 bekannt. Diese Vorrichtung umfasst einen optischen und einen kapazitiven Messwertgeber. Die Messwertgeber sind an einer bogenverarbeitenden Maschine angebracht, an welcher Bögen vereinzelt von einem Stapel abgezogen werden und dann bearbeitet werden. Die Ausgangssignale der Messwertgeber werden hinsichtlich ihrer Amplituden auf Vorliegen eines Einfach- oder Mehrfachbogens bewertet. Die Auswertung der Ausgangssignale erfolgt dabei in einer Auswerteeinheit. In dieser Auswerteeinheit wird in Abhängigkeit von der Größe der Amplitude des Ausgangssignals des optischen und/oder kapazitiven Messwertgebers jeweils nur ein Ausgangssignal zur Entscheidung, ob ein Einfach- oder Mehrfachbogen vorliegt, herangezogen.

Beispielsweise wird anhand des Ausgangssignals des optischen Messwertgebers entschieden, ob die Bögen mittels des optischen oder kapazitiven Messwertgebers kontrolliert werden.

In diesem Fall wird der optische Messwertgeber dann zur Kontrolle der Bögen eingesetzt, wenn die Amplitude des den Bogen durchdringenden Sendelichts einen vorgegebenen Mindestwert überschreitet. Liegt dagegen der Wert der Amplitude unterhalb des Mindestwerts, so wird der Bogen mittels des kapazitiven Messwertgebers kontrolliert.

Auf diese Weise werden dünne Bögen, bei denen die vom optischen Messwertgeber registrierte Amplitude hinreichend groß ist, mittels des optischen Messwertgebers kontrolliert. Dicke Bögen, die nahezu lichtundurchlässig sind, werden dagegen mittels des kapazitiven Messwertgebers kontrolliert, der bei derartigen Bögen hinreichend große Signalamplituden liefert, anhand derer Einfach- und Mehrfachbögen sicher unterschieden werden können.

Der optische und der kapazitive Messwertgeber liefern hinsichtlich der Dicke der Bögen in verschiedenen Parameterbereichen unterschiedliche Signalamplituden derart, dass sich deren Messbereiche, innerhalb derer eine sichere Unterscheidung von Doppel- und Einfachbögen möglich ist, ergänzen.

Durch die automatische Auswahl des jeweiligen Messwertgebers kann gegenüber Bogenkontrollvorrichtungen, die lediglich mit optischen oder kapazitiven Messwertgebern arbeiten, der nutzbare Messbereich erheblich erweitert werden.

Trotz der so erzielten Erweiterung des Messbereichs sind derartige Vorrichtungen nur bei einem relativ eng begrenzten Spektrum von Bogen-Materialien einsetzbar. Insbesondere bei metallisch kaschierten und/oder bedruckten Bögen ist eine sichere Unterscheidung von Bögen mit derartigen Vorrichtungen nicht gewährleistet.

Der Erfindung liegt die Aufgabe zugrunde eine Vorrichtung der eingangs genannten Art so auszubilden, dass für ein möglichst breites Spektrum von Bogen-Materialien eine sichere Kontrolle von Bögen gewährleistet ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Durch die Verwendung jeweils wenigstens eines Ultraschallsensors und eines kapazitiven Sensors ist eine sichere Kontrolle von Bögen für unterschiedliche Bogen-Materialien gewährleistet, wobei besonders vorteilhaft ist, dass die Ausgangssignale unabhängig von der Bedruckung der Bögen sind. In einer vorteilhaften Weiterbildung der Erfindung können zusätzlich optische und/oder induktive Sensoren zur Kontrolle der Bögen eingesetzt werden.

Die Zuverlässigkeit der Kontrolle der Bögen wird dadurch erhöht, dass in Abhängigkeit der während der Abgleichphase ermittelten Messwerte zur nachfolgenden Durchführung der Kontrolle der Bögen in der Auswerteeinheit die Ausgangssignale der Sensoren zur Generierung des Bogenfeststellungssignals logisch verknüpft werden. Dabei werden vorzugsweise die analogen Ausgangssignale der Sensoren zunächst mit jeweils einem Schwellwert bewertet und dadurch in binäre Ausgangssignale gewandelt. Diese binären Ausgangssignale werden dann mittels UND- oder ODER-Verknüpfungen verknüpft. Alternativ oder zusätzlich wird in der Auswerteeinheit eine Selektion der Ausgangssignale der Sensoren vorgenommen, so dass gegebenenfalls die Ausgangssignale eines Teils der Sensoren zur Kontrolle der Bögen herangezogen wird.

Durch die in der Auswerteeinheit durchgeführte Selektion werden die Sensoren, deren Ausgangssignale keine sichere Detektion von Bögen für das jeweilige Bogen-Material gewährleisten, nicht zur weiteren Auswertung herangezogen.

Durch die logische Verknüpfung der Ausgangssignale der ausgewählten Sensoren wird gegenüber einer Einzelauswertung von Sensoren eine höhere Detektionssicherheit bei der Bogenkontrolle erhalten.

Das bei der erfindungsgemäßen Auswertung erhaltene Bogenfeststellungssignal kann insbesondere angeben, ob bei der Bogendetektion ein Fehlbogen, ein Einfachbogen oder ein Mehrfachbogen vorlag. Vorzugsweise wird das Bogenfeststellungssignal als binäres Signal über einen Schaltausgang eingegeben.

In einer vorteilhaften Ausführungsform können alternativ oder zusätzlich weitere Eigenschaften der Bögen erfasst werden. Hierzu gehören insbesondere Randdefekte der Bögen wie zum Beispiel Einrisse oder Knickstellen.

Die Erfindung wird im nachstehenden anhand der Zeichnungen erläutert. Es zeigen:
- Figur 1:: Schematische Seitenansicht eines Ausschnitts einer bogenverarbeitenden Maschine mit der daran angeordneten erfindungsgemäßen Vorrichtung.
- Figur 2:: Draufsicht auf die Anordnung gemäß Figur 1

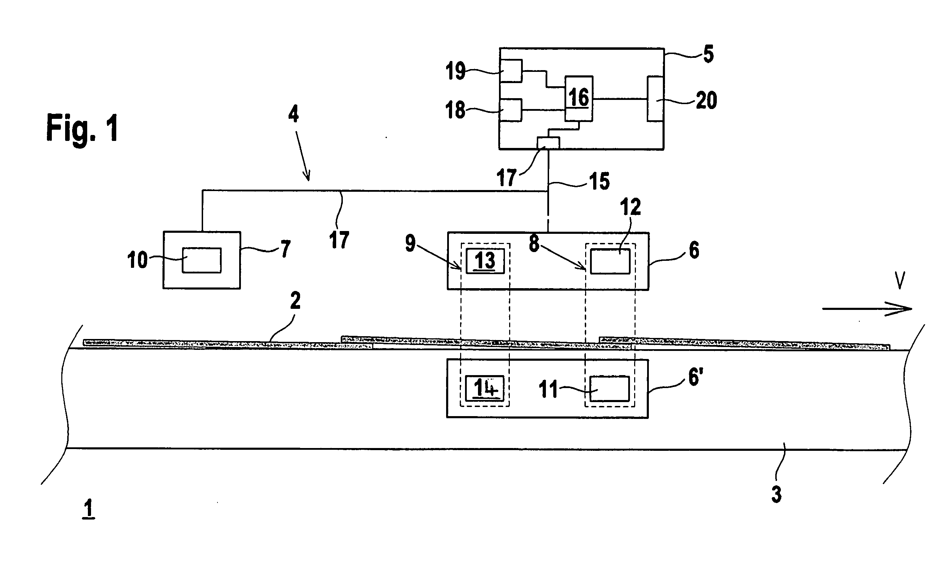

Figur 1 zeigt schematisch einen Ausschnitt einer bogenverarbeitenden Maschine 1. Die bogenverarbeitende Maschine 1 ist im vorliegenden Fall von einer Druckmaschine, beispielsweise einer Rotationsdruckmaschine gebildet.

Bei derartigen Druckmaschinen werden Bögen 2 einzeln von einem Stapel abgezogen und mittels Fördereinrichtungen in der Druckmaschine Druckwerken zugeführt. Figur 1 zeigt einen Ausschnitt eines Anlegetisches 3 am Einlauf einer solchen Druckmaschine. Die Bögen 2 werden in einer vorgegebenen Schuppung und mit einer vorgegebenen Förderrichtung V über den Anlegetisch 3 gefördert. Während des Betriebs der Druckmaschine liegen die Bögen 2 im fehlerfreien Fall wie in Figur 1 dargestellt einzeln auf dem Anlegetisch 3 und überlappen sich nur in den Randbereichen. Im Fehlerfall können mehrere, insbesondere zwei Bögen 2 übereinander liegen. Derartige Mehrfachbögen müssen frühzeitig erkannt werden, da diese bei der späteren Bedruckung zu Qualitätsverlusten im Druck oder sogar zu Beschädigungen der Druckmaschine führen können. Des Weiteren können durch eine fehlerhafte Förderung der Bögen 2 Fehlbögen auftreten, die ebenfalls erkannt werden müssen.

Zur Unterscheidung von Einfach-, Fehl- und Mehrfachbögen ist erfindungsgemäß eine Vorrichtung 4 mit einer Anordnung von Sensoren vorgesehen, die an eine gemeinsame Auswerteeinheit 5 angeschlossen sind.

Die Sensoranordnung ist in Halterungen 6, 6', 7 gelagert, die an der bogenverarbeitenden Maschine 1 befestigt ist.

Im vorliegenden Ausführungsbeispiel besteht die Sensoranordnung aus drei Ultraschallsensoren 8, einem kapazitiven Sensor 9 sowie einem kapazitiven Massendetektor 10.

Die Ultraschallsensoren 8 und der kapazitive Sensor 9 sind etwa auf gleicher Höhe des Anlagetisches an ersten gemeinsamen Halterungen 6, 6' gelagert, während der kapazitive Massendetektor 10 diesen Sensoren vorgeordnet ist und an einer separaten Halterung 7 an der bogenverarbeitenden Maschine 1 angebracht ist.

Ein Ultraschallsensor 8 und der kapazitive Sensor 9 sind auf das Zentrum der Bögen 2 ausgerichtet, wobei diese in Förderrichtung der Bögen 2 dicht hintereinander liegend angeordnet sind. Auch eine Nebeneinanderanordnung dieser Sensoren ist möglich. Zudem ist jeweils ein Ultraschallsensor 8 auf einen Randbereich der Bögen 2 ausgerichtet.

Die Ultraschallsensoren 8 weisen jeweils einen Ultraschallwellen emittierenden Ultraschallgeber 11 auf, der dicht unterhalb der Bögen 2 angeordnet ist. Jedem Ultraschallgeber 11 liegt ein dicht unterhalb der Bögen 2 angeordneter Ultraschallempfänger 12 gegenüber.

Je nachdem, ob im Zwischenraum zwischen einem Ultraschallgeber 11 und dem zugeordneten Ultraschallempfänger 12 kein Bogen 2, ein Bogen 2 oder mehrere Bögen 2 liegen, ergibt sich eine unterschiedliche Schwächung der Ultraschallwellen und dementsprechend eine unterschiedliche Amplitude des Ausgangssignals des Ultraschallsensors 8.

Der kapazitive Massendetektor 10 besteht im Wesentlichen aus einer oberhalb der Bögen 2 angeordneten Elektrode. Der kapazitive Sensor 9 weist eine Elektrode 13 oberhalb der Bögen 2 und eine Gegenelektrode 14 unterhalb der Bögen 2 auf. Je nach Anzahl der Bögen 2 im Zwischenraum zwischen der Elektrode 13 und der Gegenelektrode 14 variiert die Kapazität zwischen Elektrode 13 und Gegenelektrode 14 und führt somit zu entsprechenden Änderungen der Amplituden der Ausgangssignale des kapazitiven Sensors 9.

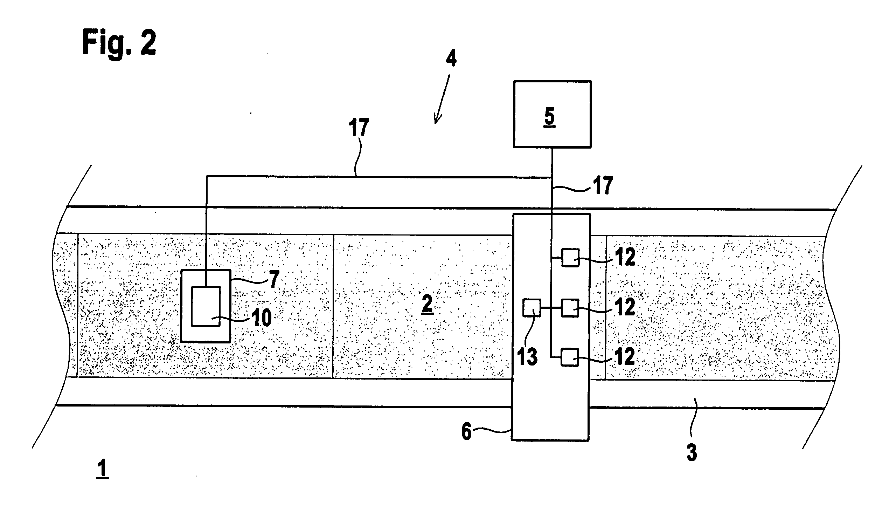

In Erweiterung der Sensoranordnung gemäß den Figuren 1 und 2 können auch mehrere kapazitive Sensoren 9 und Ultraschallsensoren 8 vorgesehen werden. Alternativ oder zusätzlich können auch andere Sensoren wie zum Beispiel induktive oder optische Sensoren vorgesehen sein.

Die optischen Sensoren weisen vorzugsweise einen Sendelichtstrahlen emittierenden Sender sowie einen als CCD-Zeilenelement ausgebildeten Empfänger auf.

Ein derartiger optischer Sensor kann sowohl im Auflichtverfahren als auch im Durchlichtverfahren betrieben werden. Im Auflichtverfahren werden die von den Bögen 2 zurückreflektierten Sendelichtstrahlen im Empfänger registriert. Im Durchlichtverfahren werden die die Bögen 2 durchsetzenden Sendelichtstrahlen im Empfänger registriert.

Die Sensoren sind über einen Busleitungen 15 aufweisenden Sensorbus an die Auswerteeinheit 5 angeschlossen. Über diesen Sensorbus werden die analogen Ausgangssignale der Sensoren in die Auswerteeinheit 5 eingelesen. Zudem erfolgt die Steuerung der Sensoren über den Sensorbus.

Die Auswerteeinheit 5 weist als Rechnereinheit 16 einen Mikroprozessor oder dergleichen zur Verarbeitung der Ausgangssignale der Sensoren auf. Zudem weist die Auswerteeinheit 5 mehrere Eingänge 17 und Ausgänge 18, 19 auf, wobei die Ausgangssignale der Sensoren über die Eingänge 17 in den Mikroprozessor eingelesen werden.

In Abhängigkeit der Ausgangssignale wird in der Auswerteeinheit 5 wenigstens ein Bogenfeststellungssignal generiert, welches angibt, ob mit der Sensoranordnung ein Einfach-, ein Mehrfach- oder ein Fehlbogen registriert wird. Das Bogenfeststellungssignal wird über einen Schaltausgang bildenden Ausgang 18 der Auswerteeinheit 5 ausgegeben.

Zudem weist die Auswerteeinheit 5 wenigstens einen als Analogausgang ausgebildeten Ausgang 19 auf. Über diesen Ausgang 19 können die analogen Ausgangssignale eines Sensors ausgegeben werden. Die Ausgabe der analogen Ausgangssignale erfolgt mit einer vorgegebenen Triggerung, die vorzugsweise dem Fördertakt der bogenverarbeitenden Maschine 1 entspricht. Durch Registrierung des Amplitudenverlaufs der Ausgangssignale kann damit der Verlauf der Schuppung der in der bogenverarbeitenden Maschine 1 geförderten Bögen 2 verfolgt werden. Vorzugsweise werden die Ausgangssignale des kapazitiven Sensors 9 oder des zentralen Ultraschallsensors 8 über dem Analogausgang ausgegeben.

Schließlich weist die Auswerteeinheit 5 eine an den Mikroprozessor angeschlossene Anzeigevorrichtung 20 auf. Die Anzeigevorrichtung 20 ist vorzugsweise von einer 7-Segmentanzeige gebildet. Über die Anzeigevorrichtung 20 können insbesondere die Zustände der Eingänge 17 und Ausgänge 18, 19 der Auswerteeinheit 5 angezeigt werden. Zudem kann die Anzeigevorrichtung 20 als Ziffernanzeige betrieben werden.

Im vorliegenden Ausführungsbeispiel werden die Ausgangssignale des kapazitiven Sensors 9 und/oder des zentralen Ultraschallsensors 8 zur Unterscheidung von Fehl-, Einfach- und Mehrfachbögen herangezogen. Das hierbei verwendete Auswerteverfahren wird während einer Abgleichphase definiert.

Während einer derartigen Abgleichphase werden vorzugsweise im fehlerfreien Fall, d.h. bei der Detektion eines Einfachbogens die Ausgangssignale des kapazitiven Sensors 9 und des zentralen Ultraschallsensors 8 analysiert. Je nach Materialbeschaffenheit des Bogens 2 ergeben sich dabei unterschiedliche Eignungen der einzelnen Sensoren zum Nachweis des jeweiligen Bogenmaterials. In einer besonders vorteilhaften Ausführungsform werden insbesondere auch die Ausgangssignale des kapazitiven Massendetektors 10 während der Abgleichphase ausgewertet.

In Abhängigkeit der bei der Abgleichphase ermittelten Messwerte werden in der Auswerteeinheit 5 logische Verknüpfungen der Ausgangssignale des kapazitiven Sensors 9 und des zentralen Ultraschallsensors 8 definiert, welche das Auswerteverfahren während der Bogenkontrolle definieren.

Ergibt sich während der Abgleichphase, dass für das jeweilige Bogenmaterial beide Sensoren zur Bogenkontrolle geeignet sind, so werden die Ausgangssignale des kapazitiven Sensors 9 und des zentralen Ultraschallsensors 8 vorzugsweise mit einer UND- oder einer ODER-Verknüpfung verknüpft um das Bogenfeststellungssignal zu generieren.

Dabei werden die analogen Ausgangssignale der Sensoren vorzugsweise zunächst mit einem in der Auswerteeinheit 5 abgespeicherten Schwellwert bewertet und dabei in digitale Ausgangssignale gewandelt. Alternativ können die Höhen der Schwellwerte während der Abgleichphase ermittelt werden.

Vorzugsweise werden die Schwellwerte so gewählt, dass das Ausgangssignal oberhalb oder unterhalb des Schwellwerts liegt, falls ein Einfach- oder Mehrfachbogen vorliegt. Zur Detektion von Fehlbögen kann gegebenenfalls ein weiterer Schwellwert vorgesehen sein.

Die auf diese Weise digitalisierten Ausgangssignale werden dann mittels über die Auswerteeinheit 5 vorgegebener UND- oder ODER-Verknüpfungen verknüpft, wodurch das Bogenfeststellungssignal erhalten wird.

Falls sich während der Abgleichphase herausstellt, dass für ein bestimmtes Bogenmaterial einer der Sensoren Ausgangssignale liefert, die keine sichere Bogenkontrolle gewährleistet, wird durch eine durch die Auswerteeinheit 5 durchgeführte Selektion dieser Sensor bei der nachfolgenden Bogenkontrolle nicht zur Auswertung herangezogen. Vorzugsweise wird dieser Sensor nach Abschluss der Abgleichphase über die Auswerteeinheit 5 deaktiviert.

Ein Beispiel hierfür ist die Detektion von metallisch kaschierten Bögen 2. Bei derartigen Bögen 2 werden in der Abgleichphase bei dem kapazitiven Sensor 9 und dem kapazitiven Massendetektor 10 Ausgangssignale erhalten, die keine sichere Unterscheidung von Einfach- und Mehrfachbögen gewährleisten. Dementsprechend werden während der auf die Abgleichphase folgenden Bogenkontrolle nur die vom zentralen Ultraschallsensor 8 generierten Ausgangssignale zur Generierung des Bogenfeststellungssignals herangezogen.

Ein weiteres Beispiel ist die Unterscheidung von Zwei- und Dreifachbögen. Hierzu sind die Ultraschallsensoren 8 nicht geeignet, so dass diese in diesem Fall deaktiviert werden. Die Bogenkontrolle erfolgt dann zweckmäßigerweise allein mit dem kapazitiven Sensor 9.

Für den Fall, dass überhaupt kein Sensor Ausgangssignale liefert, mittels derer eine sichere Bogenkontrolle möglich ist, erfolgt über die Auswerteeinheit 5 eine Ausgabe einer entsprechenden Fehlermeldung.

Die Signale des kapazitiven Massendetektors 10 werden dabei nur während der Abgleichphase, nicht jedoch während der Bogenkontrolle benötigt.

Da der kapazitive Massendetektor 10 in hinreichendem Abstand der Sensoranordnung mit den übrigen Sensoren vorgeordnet ist, werden die Bögen 2 immer zunächst vom kapazitiven Massendetektor 10 erfasst, bevor sie von den übrigen Sensoren erfasst werden. Dies kann vorteilhaft dazu verwendet werden, gegebenenfalls bei Bögen 2 vorhandene lokale metallische Kaschierungen fortlaufend während der Bogenkontrolle zu erfassen, um dann bei Detektion derartiger metallischer Kaschierungen den kapazitiven Sensor 9 zu deaktivieren. Auf diese Weise kann das in der Auswerteeinheit 5 definierte Auswahlverfahren auch noch während der Bogenkontrolle interaktiv geändert werden, d.h. in diesem Fall ist ein Teil der Abgleichphase in die Betriebsphase der Vorrichtung 4 zur Durchführung der Bogenkontrolle hinein verlagert.

Die beiden seitlich angeordneten Ultraschallsensoren 8 dienen zur Detektion von Randfehlern der Bögen 2. Derartige Randfehler können von Einrissen oder Knickstellen der Bögen 2 im Randbereich gebildet sein. Je nach Ausbildung des Randfehlers gelangen bei dessen Detektion die Ultraschallwellen ungehindert zum jeweiligen Ultraschallempfänger 12 oder es werden durch Faltungen oder Knicke in den Bögen 2 Ausgangssignale erhalten, die einer Detektion von Mehrfachbögen entsprechen.

Durch eine geeignete Vorgabe von Schwellwerten zur Bewertung der Ausgangssignale dieser Ultraschallsensoren 8 können diese Randfehler sicher detektiert werden.

Die Detektionssicherheit kann weiter dadurch gesteigert werden, dass die Ausgangssignale der Ultraschallsensoren 8 im Randbereich mit den Ausgangssignalen des zentralen Ultraschallsensors 8 verglichen werden. Liegt kein Randfehler bei dem jeweils detektierten Bogen 2 vor, so sind die Ausgangssignale der Ultraschallsensoren 8 wenigstens näherungsweise identisch. Bei Vorliegen eines Randfehlers weicht das Ausgangssignal des entsprechenden Ultraschallsensors 8 von den Ausgangssignalen der übrigen Ultraschallsensoren 8 signifikant ab. Anhand der Registrierung dieser Signalabweichungen in der Auswerteeinheit 5 können die Randfehler sicher detektiert werden.

Das Auftreten eines Randfehlers wird in Form eines weiteren Bogenfeststellungssignals über den oder einen weiteren Schaltausgang der Auswerteeinheit 5 ausgegeben.

Alternativ oder zusätzlich können die Ausgangssignale der seitlich angeordneten Ultraschallsensoren 8 auch zur Unterscheidung von Fehl-, Einfach- und Mehrfachbögen herangezogen werden, wobei deren Ausgangssignale mit den Ausgangssignalen des zentralen Ultraschallsensors 8 und/oder des kapazitiven Sensors 9 verknüpft werden.

### Bezugszeichenliste

- (1): Maschine
- (2): Bogen
- (3): Anlegetisch
- (4): Vorrichtung
- (5): Auswerteeinheit
- (6): Halterung
- (6'): Halterung
- (7): Halterung
- (8): Ultraschallsensor
- (9): kapazitiver Sensor
- (10): Massendetektor
- (11): Ultraschallgeber
- (12): Ultraschallempfänger
- (13): Elektrode
- (14): Gegenelektrode
- (15): Busleitung
- (16): Rechnereinheit
- (17): Eingang
- (18): Ausgang
- (19): Ausgang
- (20): Anzeigevorrichtung

## Patentansprüche

1. Vorrichtung zur Kontrolle von Bögen in einer bogenverarbeitenden Maschine mit wenigstens einem die Bögen erfassenden Sensor und einer Auswerteeinheit, wobei zur Detektion von Einfachbögen und/oder Mehrfachbögen in der Auswerteeinheit aus den Ausgangssignalen ein Bogenfeststellungssignal abgeleitet wird, **dadurch gekennzeichnet, dass** als Sensoren wenigstens ein kapazitiver Sensor (9) und wenigstens ein Ultraschallsensor (8) vorgesehen sind, dass das Bogenfeststellungssignal aus einer logischen Verknüpfung der Ausgangssignale der Sensoren abgeleitet ist, wobei die logische Verknüpfung in Abhängigkeit der während einer Abgleichphase ermittelten Ausgangssignale der Sensoren durch die Auswerteeinheit (5) festgelegt ist.

2. Vorrichtung nach Anspruch 1, **dadurch gekennzeichnet, dass** die analogen Ausgangssignale der Sensoren jeweils mittels wenigstens eines Schwellwerts bewertet werden, und dass die dadurch erhaltenen binären Ausgangssignale logisch verknüpft werden.

3. Vorrichtung nach einem der Ansprüche 1 oder 2, **dadurch gekennzeichnet, dass** die logischen Verknüpfungen von jeweils wenigstens einer UND-, einer ODER-Verknüpfung und/oder einer Selektion von Ausgangssignalen verschiedener Sensoren gebildet ist.

4. Vorrichtung nach einem der Ansprüche 1 - 3, **dadurch gekennzeichnet, dass** zur Selektion von Sensoren diese über die Auswerteeinheit (5) aktivierbar oder deaktivierbar sind.

5. Vorrichtung nach einem der Ansprüche 1 - 4, **dadurch gekennzeichnet, dass** diese neben dem kapazitiven Sensor (9) und dem Ultraschallsensor (8) zusätzlich wenigstens einen optischen und/oder induktiven Sensor aufweist.

6. Vorrichtung nach Anspruch 5, **dadurch gekennzeichnet, dass** der oder jeder optische Sensor einen Sendelichtstrahlen emittierenden Sender und als Empfänger ein CCD-Zeilenelement aufweist.

7. Vorrichtung nach Anspruch 6, **dadurch gekennzeichnet, dass** zur Detektion von Bögen (2) mittels des oder jeden optischen Sensors in dessen Empfänger die Sendelichtstrahlen des Senders erfasst werden, die von den Bögen (2) reflektiert werden oder die die Bögen (2) durchsetzen.

8. Vorrichtung nach einem der Ansprüche 1 - 7, **dadurch gekennzeichnet, dass** den Sensoren als weiterer Sensor wenigstens ein in Förderrichtung der Bögen (2) diesen vorgeordneter kapazitiver Massendetektor (10) vorgeordnet ist.

9. Vorrichtung nach Anspruch 8, **dadurch gekennzeichnet, dass** die Ausgangssignale des kapazitiven Massendetektors (10) nur während der Abgleichphase in der Auswerteeinheit (5) ausgewertet werden.

10. Vorrichtung nach Anspruch 9, **dadurch gekennzeichnet, dass** bei der Detektion eines metallisch kaschierten Bogens (2) mittels des kapazitiven Massendetektors (10) während der Abgleichphase der oder jeder kapazitive Sensor (9) während der Kontrolle der Bögen (2) deaktiviert ist.

11. Vorrichtung nach einem der Ansprüche 1 - 10, **dadurch gekennzeichnet, dass** mittels des Bogenfeststellungssignals eine Unterscheidung von Fehlbögen, Einfachbögen und Mehrfachbögen erfolgt.

12. Vorrichtung nach einem der Ansprüche 1 - 11, **dadurch gekennzeichnet, dass** mittels des Bogenfeststellungssignals Randfehler der Bögen (2) identifizierbar sind.

13. Vorrichtung nach Anspruch 12, **dadurch gekennzeichnet, dass** zur Feststellung von Randfehlern der Bögen (2) die Ausgangssignale wenigstens eines auf das Zentrum eines Bogens (2) gerichteten Sensors und wenigstens eines auf den Randbereich eines Bogens (2) gerichteten Sensors verglichen werden.

14. Vorrichtung nach Anspruch 13, **dadurch gekennzeichnet, dass** zur Feststellung von Randfehlern der Bögen (2) die Ausgangssignale von Sensoren gleichen Typs verglichen werden.

15. Vorrichtung nach einem der Ansprüche 1 - 14, **dadurch gekennzeichnet, dass** die Auswerteeinheit (5) wenigstens einen Analogausgang aufweist, über welchen die analogen Ausgangssignale eines Sensors ausgebbar sind.

16. Vorrichtung nach einem der Ansprüche 1 - 15, **dadurch gekennzeichnet, dass** die Auswerteeinheit (5) wenigstens einen Schaltausgang zur Ausgabe des Bogenfeststellungssignals aufweist.

17. Vorrichtung nach einem der Ansprüche 1 - 16, **dadurch gekennzeichnet, dass** die Sensoren über einen Sensorbus an die Auswerteeinheit (5) angeschlossen sind.

18. Vorrichtung nach einem der Ansprüche 1 - 17, **dadurch gekennzeichnet, dass** diese eine Anzeigevorrichtung (20) zur Zustandsanzeige von Ein-(19) und/oder Ausgängen (18, 19) der Auswerteeinheit (5) aufweist.

## Claims

1. Device for checking sheets in a sheet-processing machine with at least one sensor detecting the sheets and an evaluating unit, wherein for detection of single sheets and/or multiple sheets a sheet detecting signal is derived in the evaluating unit from the output signals, **characterised in that** at least one capacitive sensor (9) and at least one ultrasound sensor (9) are provided as sensors and that the sheet detecting signal is derived from a logical linking of the output signals of the sensors, wherein the logical linking is established in dependence on the output signals, which are ascertained during a trimming phase, of the sensors.

2. Device according to claim 1, **characterised in that** the analog output signals of the sensors are respectively evaluated by means of at least one threshold value and that the thereby obtained binary output signals are logically linked.

3. Device according to one of claims 1 and 2, **characterised in that** the logical linkings are formed each time by at least one AND linking, at least one OR linking and/or at least one selection of output signals of different sensors.

4. Device according to one of claims 1 to 3, **characterised in that** for selection of sensors these are activatable or deactivatable by way of the evaluating unit (5).

5. Device according to one of claims 1 to 4, **characterised in that** apart from the capacitive sensor (9) and the ultrasound sensor (8) this additionally comprises at least one optical and/or inductive sensor.

6. Device according to claim 5, **characterised in that** the or each optical sensor comprises a transmitter emitting transmitted light beams and a CCD line element as receiver.

7. Device according to claim 6, **characterised in that** for detection of sheets (2) by means of the or each optical sensor there is detection in the receiver thereof those transmitted light beams of the transmitter which are reflected by the sheets (2) or pass through the sheets (2).

8. Device according to one of claims 1 to 7, **characterised in that** at least one capacitive mass detector (10) arranged upstream of the sheets (2) in conveying direction thereof is arranged as a further sensor upstream of the sensors.

9. Device according to claim 8, **characterised in that** the output signals of the capacitive mass detector (10) are evaluated only during the trimming phase in the evaluating unit (5).

10. Device according to claim 9, **characterised in that** in the case of detection of a metallically coated sheet (2) by means of the capacitive mass detector (10) during the comparison phase the or each capacitive sensor (9) is deactivated during checking of the sheets (2).

11. Device according to one of claims 1 to 10, **characterised in that** a differentiation between faulty sheets, single sheets and multiple sheets is carried out by means of the sheet detecting signal.

12. Device according to one of claims 1 to 11, **characterised in that** edge faults of the sheets (2) are identifiable by means of the sheet detecting signal.

13. Device according to claim 12, **characterised in that** for detection of edge faults of the sheets (2) the output signals of at least one sensor directed to the centre of a sheet (2) and of at least one sensor directed to the edge region of a sheet (2) are compared.

14. Device according to claim 13, **characterised in that** for detection of edge faults of the sheets (2) the output signals of sensors of the same type are compared.

15. Device according to one of claims 1 to 14, **characterised in that** the evaluating unit (5) has at least one analog output by way of which the analog output signals of a sensor can be issued.

16. Device according to one of claims 1 to 15, **characterised in that** the evaluating unit (5) has at least one switching output for issue of the sheet detecting signal.

17. Device according to one of claims 1 to 16, **characterised in that** the sensors are connected with the evaluating unit (5) by way of a sensor bus.

18. Device according to one of claims 1 to 17, **characterised in that** this comprises a display device (20) for status display of inputs (19) and/or outputs (18, 19) of the evaluating unit (5).

## Revendications

1. Dispositif pour contrôler des feuilles dans une machine à traiter des feuilles, avec au moins un capteur saisissant les feuilles et une unité d'évaluation, un signal de détection de feuille pour la détection de feuilles simples et/ou de feuilles multiples étant déduit des signaux de sortie dans l'unité d'évaluation, **caractérisé par le fait qu'**il est prévu comme capteurs au moins un capteur capacitif (9) et au moins un capteur à ultrasons (8), que le signal de détection de feuille est déduit d'une combinaison logique des signaux de sortie des capteurs, la combinaison logique étant établie par l'unité d'évaluation (5) en fonction des signaux de sortie des capteurs déterminés pendant une phase de réglage.

2. Dispositif selon la revendication 1, **caractérisé par le fait que** les signaux de sortie analogiques de chaque capteur sont évalués au moyen d'au moins une valeur seuil et que les signaux de sortie binaires ainsi obtenus sont combinés logiquement.

3. Dispositif selon la revendication 1 ou 2, **caractérisé par le fait que** les combinaisons logiques sont formées chaque fois au moins d'une combinaison ET, d'une combinaison OU et/ou d'une sélection de signaux de sortie de différents capteurs.

4. Dispositif selon l'une des revendications 1 à 3, **caractérisé par le fait que** pour leur sélection, les capteurs sont activables ou désactivables par l'unité d'évaluation (5).

5. Dispositif selon l'une des revendications 1 à 4, **caractérisé par le fait que** celui-ci présente en plus du capteur capacitif (9) et du capteur à ultrasons (8) au moins un capteur optique et/ou inductif.

6. Dispositif selon la revendication 5, **caractérisé par le fait que** le ou chaque capteur optique présente un émetteur émettant des rayons lumineux d'émission et comme récepteur un élément linéaire CCD.

7. Dispositif selon la revendication 6, **caractérisé par le fait que** pour la détection de feuilles (2) au moyen du ou de chaque capteur optique, les rayons lumineux d'émission de l'émetteur qui sont réfléchis par les feuilles (2) ou qui traversent les feuilles (2) sont saisis dans son récepteur.

8. Dispositif selon l'une des revendications 1 à 7, **caractérisé par le fait qu'**au moins un détecteur de masse capacitif (10) utilisé comme capteur supplémentaire est placé avant les capteurs dans le sens de transport des feuilles (2).

9. Dispositif selon la revendication 8, **caractérisé par le fait que** les signaux de sortie du détecteur de masse capacitif (10) ne sont évalués dans l'unité d'évaluation (5) que pendant la phase de réglage.

10. Dispositif selon la revendication 9, **caractérisé par le fait qu'**en cas de détection d'une feuille (2) doublée métal au moyen du détecteur de masse capacitif (10) pendant la phase de réglage, le ou chaque capteur capacitif (9) est désactivé pendant le contrôle des feuilles (2).

11. Dispositif selon l'une des revendications 1 à 10, **caractérisé par le fait que** le signal de détection de feuille permet d'effectuer une distinction entre feuilles défectueuses, feuilles simples et feuilles multiples.

12. Dispositif selon l'une des revendications 1 à 11, **caractérisé par le fait que** le signal de détection de feuille permet d'identifier des défauts de bord des feuilles (2).

13. Dispositif selon la revendication 12, **caractérisé par le fait que** pour détecter des défauts de bord des feuilles (2), on compare les signaux de sortie d'au moins un capteur dirigé sur le centre d'une feuille (2) et d'au moins un capteur dirigé sur le bord d'une feuille (2).

14. Dispositif selon la revendication 13, **caractérisé par le fait que** pour détecter des défauts de bord des feuilles (2), on compare les signaux de sortie de capteurs de même type.

15. Dispositif selon l'une des revendications 1 à 14, **caractérisé par le fait que** l'unité d'évaluation (5) présente au moins une sortie analogique via laquelle les signaux de sortie analogiques d'un capteur sont délivrables.

16. Dispositif selon l'une des revendications 1 à 15, **caractérisé par le fait que** l'unité d'évaluation (5) présente au moins une sortie de commutation pour la délivrance du signal de détection de feuille.

17. Dispositif selon l'une des revendications 1 à 16, **caractérisé par le fait que** les capteurs sont connectés à l'unité d'évaluation (5) par un bus de capteurs.

18. Dispositif selon l'une des revendications 1 à 17, **caractérisé par le fait que** celle-ci présente un dispositif d'affichage (20) pour afficher l'état des entrées (17) et/ou des sorties (18, 19) de l'unité d'évaluation (5).
